(19) Europäisches Patentamt
European Patent Office
Office européen des brevets

(11) EP 0 835 849 B1

(12) EUROPÄISCHE PATENTSCHRIFT

(45) Veröffentlichungstag und Bekanntmachung des Hinweises auf die Patenterteilung:
**08.08.2001 Patentblatt 2001/32**

(51) Int Cl.[7]: **C03C 17/00**, C03C 17/25, G02B 1/11

(21) Anmeldenummer: **97116441.3**

(22) Anmeldetag: **20.09.1997**

# (54) Verfahren und Beschichtungszusammensetzung zur Herstellung einer Antireflexionsbeschichtung

Method and coating composition for the production of an antireflective coating

Méthode et composition de revêtement pour la production d'un revêtement antiréfléchissant

(84) Benannte Vertragsstaaten:
**AT BE CH DE DK ES FI FR GB GR IE IT LI LU MC NL PT SE**

(30) Priorität: **14.10.1996 DE 19642419**

(43) Veröffentlichungstag der Anmeldung:
**15.04.1998 Patentblatt 1998/16**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
- **Glaubitt, Walther, Dipl.-Ing.**
  **97209 Veitshöchheim (DE)**
- **Gombert, Andreas, Dipl.-Ing.**
  **79106 Freiburg (DE)**

(56) Entgegenhaltungen:
**EP-A- 0 504 926**
**EP-A- 0 597 490**
**EP-A- 0 798 272**
**WO-A-97/06896**
**US-A- 4 446 171**

- **PATENT ABSTRACTS OF JAPAN vol. 095, no. 008, 29.September 1995 & JP 07 138046 A (CENTRAL GLASS CO LTD;OTHERS: 01), 30.Mai 1995,**

Bemerkungen:
Die Akte enthält technische Angaben, die nach dem Eingang der Anmeldung eingereicht wurden und die nicht in dieser Patentschrift enthalten sind.

EP 0 835 849 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft ein Verfahren zur Herstellung einer hochporösen Antireflexionsbeschichtung, die nach diesem Verfahren hergestellte Beschichtung und Zusammensetzungen zur Durchführung des Verfahrens. Die erfindungsgemäße Antireflexionsbeschichtung wird zur gleichzeitigen Erhöhung der Transmission und zur Verhütung oder Minimierung von unerwünschten Reflexionen sichtbarer oder anderer elektromagnetischer Strahlung eingesetzt, wie sie z.B. an Kathodenstrahlröhren, Flüssigkristallanzeigen, Instrumententafeln, Brillengläsern, Bildschirmen, Solarkollektoren oder Automobil-Windschutzscheiben auftritt.

Beim Durchgang von Licht durch die Grenzfläche zweier Medien mit unterschiedlichem Brechungsindex wird ein Teil der Strahlung reflektiert. Beim senkrechten Einfall von Licht auf eine Glasscheibe mit dem Brechungsindex n = 1.5 beträgt der reflektierte Anteil beim Eintritt ins Glas ca. 4 %. Fällt das Licht schräg auf die Grenzfläche, wird in der Regel ein weitaus größerer Anteil reflektiert.

Anzeigevorrichtungen, wie z.B. Kathodenstrahlröhren oder Flüssigkristallanzeigen werden vielfältig eingesetzt. Deren Bildqualität wurde zwar verbessert, jedoch entstehen häufig schwer erkennbare Bilder infolge von Reflexionen. Desweiteren wird die Übertragungssicherheit der Informationen von z.B. Instrumententafeln, Uhrgläsern oder Kfz-Windschutzscheiben durch Reflexionen stark vermindert.

Für eine Vielzahl von optischen Systemen ist es wünschenswert, die Reflexion zu verringern. Ein bekanntes Beispiel sind Antireflexionsschichten auf Brillengläsern. Durch den Einsatz von Antireflexionsschichten auf Abdeckungen von solaren Anwendungen ließe sich deren Effizienz erhöhen.

Durch das Aufbringen von Interferenzschichten wird die Reflexion verringert. Wird z.B. auf Glas (n = 1.5) eine Schicht der Dicke $\lambda/4$ aufgebracht, so kommt es zu destruktiver Interferenz zwischen dem reflektierten Anteil des Übergangs Luft/Schicht und des Übergangs Schicht/Glas. Die Bedingungen für destruktive Interferenz gelten freilich immer nur für eine bestimmte Wellenlänge und einen bestimmten Einfallswinkel. Der Brechungsindex der Schicht bestimmt die Höhe des Reflexionsminimums. Für die optimale Entspiegelung von Glas muß er 1.22 betragen, um bei der Wellenlänge $\lambda$ eine Reflexion von nahezu Null zuerreichen. Dieser niedrige Brechungsindex ist mit dichten Schichten nicht erzielbar. Eine Einschichtentspieglung der genannten Art ist sowohl visuell als auch solar äußerst wirksam. Die häufig eingesetzten Drei-Schicht-Interferenzschichten können in ihrer antireflektierenden Wirkung maximal den Bereich des sichtbaren Lichtes (400 - 800 nm) sinnvoll abdecken. Für solare Anwendungen sind solche Schichten jedoch ungeeignet, weil sich das Spektrum der Sonnenstrahlung über einen weit breiteren Bereich erstreckt.

Durch eine Oberfläche, die einen Gradienten der Brechungsindices aufweist, kann ebenfalls eine Verringerung der Reflexion erreicht werden. Dies bedeutet, daß sich der Brechungsindex nicht abrupt ändert, sondern er nähert sich in mehreren Schritten vom Wert für Luft (n = 1) demjenigen für Glas an. Der Vorteil solcher Schicht ist, daß sie spektral breitbandig und für alle Einfallswinkel die Reflexion wirksam verringern.

Zur Herstellung entspiegelter Oberflächen existieren bereits verschiedene Verfahren. So hat man z.B. zur Herabsetzung unerwünschter Oberflächenreflexionen transparente Antireflexionsfilme mit unterschiedlichen Brechungsindices auf die zu entspiegelnden Flächen aufgebracht. Dies ist aber problematisch, da mindestens zwei Schichten aufgetragen werden müssen, wodurch die Produktivität sinkt und die Produktionskosten steigen. Um beispielsweise Brillengläser oder Bildschirme zu entspiegeln, werden Interferenzschichten aufgedampft. Mit diesem Verfahren können zwar relativ abriebbeständige Schichten erzeugt werden, nachteilig sind jedoch die hohen Kosten von 100 bis 150 DM pro Quadratmeter entspiegelter Fläche. Gesputterte Multilayer-Interferenzschichten dagegen eignen sich nur für die visuelle Entspiegelung und sind zudem nicht auf alle Substratgeometrien, z.B. auf Innenseiten von Rohren, applizierbar. Am weitesten verbreitet ist die diffuse Entspiegelung durch Aufrauhen der Oberfläche, wodurch aber keine Erhöhung der Transmission erreicht wird. Optisch hochwertige Entspiegelungen werden erreicht, indem über ein Sol-Gel-Verfahren ein Dreischichtsystem aufgebracht wird. Mit diesem Verfahren können selbst große Schaufenster entspiegelt werden. Es ist jedoch mit Kosten von 140 bis 200 DM/$m^2$ extrem teuer.

Aus der DE 4430859 A1 ist ein Antireflexionsfilm bekannt, der aus 2 Schichten mit unterschiedlichen Brechungsindices besteht, und wobei mindestens die erste Schicht einen Lichtabsorber enthält. Die Herstellung dieser Schichten erfolgt zwar nach üblichen Verfahren, z.B. durch Sputtern, durch Dampfabscheidung oder durch übliche Beschichtungsmethoden, aber sie ist dennoch kostenintensiv. Nachteil dieses Antireflexionsfilmes und seines Herstellungsverfahrens ist ferner, daß aufgrund des Lichtabsorbers keine signifikante Erhöhung der Transmission zu erwarten ist.

Aus der EP 0514973 A2 ist eine Antireflexionsbeschichtung, insbesondere für Kathodenstrahlröhren bekannt. Diese Beschichtung weist einen Gradienten des Brechungsindex auf, und zwar nimmt dieser von der Substratoberfläche in Richtung der äußeren Oberfläche der Beschichtung ab. Diese Beschichtung wird über ein Sol-Gel-Verfahren hergestellt, wobei während der Bildung des Gels die Reaktionsbedingungen derart variiert werden, daß ein nichtporöses Gel entsteht, in welchem der Vernetzungsgrad von der Substratoberfläche in Richtung der äußeren Oberfläche der Beschichtung zunimmt. Nachteil dieses Verfahrens ist, daß aufgrund der relativ großen Partikel in der Schicht Streuung auftritt, die zur Erniedrigung der Transmission führt, und daß es somit für solare Anwendungen ungeeignet

ist. Außerdem sind Mehrfachbeschichtungen sehr kostenintensiv.

Aus der US 4,830,879 ist ebenfalls eine Antireflexionsbeschichtung für Glas-, Metall- und Kristalloberflächen bekannt, die mittels einer Mehrfachbeschichtung und über Sol-Gel-Verfahren durch hydrolytische Kondensation von Metallalkoxiden hergestellt wird. Dazu werden vier unterschiedlich gealterte Sole mit unterschiedlichen Partikelgrößen gefertigt, mit denen das Substrat dann nacheinander beschichtet wird. Die resultierende Antireflexionsbeschichtung weist einen Gradienten der Partikelgröße und damit der Porosität und des Brechungsindex auf. Solche Mehrschichtsysteme oder Gradientenschichten führen zwar zu breitbandigen Entspiegelungen, jedoch sind hierfür zur Oberfläche des Schichtsystems hin extrem poröse Gefüge erforderlich (n = 1.05 !), die mechanisch sehr instabil sind. Nachteil dieser Beschichtung ist außerdem ihr aufwendiges Herstellungsverfahren, das durch die zahlreichen Verfahrensschritte sehr kostenintensiv ist.

Aufgabe der vorliegenden Erfindung ist es deshalb, ein Verfahren bereit zu stellen, mit dem durch eine Einfachbeschichtung der für eine Entspiegelung ideale Brechungsindex erreicht wird und mit dem die Oberfläche von unterschiedlichsten Substraten, wie z.B. von Gläsern, Metallen oder Kunststoffen, ausgerüstet werden kann, so daß Reflexionen vermindert oder gar vermieden werden. Die Ausrüstung der Oberfläche soll so angelegt sein, daß neben einer Reflexionsverminderung oder -vermeidung auch eine Erhöhung der Transmission erreicht wird. Ferner soll auch auf großflächigen Substraten die Reflexion wirkungsvoll, in gleichbleibender Qualität und kostengünstig ausgeschaltet oder vermindert werden können. Die Antireflexionsausrüstung soll in nur einem Verfahrensschritt aufgebracht werden können und sie soll auch auf großen Flächen nur eine geringe Dickenschwankung zeigen. Das Verfahren soll so universell ausgelegt sein, daß die verschiedensten Substratmaterialien mit einer Antireflexionsausrüstung versehen werden können und daß Reflexionen elektromagnetischer Strahlung mit unterschiedlichen Wellenlängen reduziert oder unterbunden wird.

Gelöst wird diese Aufgabe dadurch, daß man eine kolloid-disperse Lösung auf das zu entspiegelnde Substrat aufbringt und trocknet und dann durch Erhitzen aus der Beschichtung die organischen Bestandteile entfernt. Die kolloid-disperse Lösung weist einen pH-Wert von ≥ 7 auf und ist durch hydrolytische Kondensation von Silicium-Verbindungen der allgemeinen Formel I erhalten worden,

$$R_aSiX_{4-a} \qquad (I)$$

in der die Reste gleich oder verschieden sind und R einen organischen Rest mit 1 bis 10 Kohlenstoff-Atomen bedeutet, der durch Sauerstoff- und/oder Schwefel-Atome und/oder durch Amino-Gruppen unterbrochen sein kann, X für Wasserstoff, Halogen, Hydroxy, Alkoxy, Acyloxy, Alkylcarbonyl, Alkoxycarbonyl oder $NR'_2$ steht, mit R' gleich Wasserstoff, Alkyl oder Aryl und a gleich 0, 1 oder 2 ist. Zur Herstellung der kolloidal-dispersen Lösung können monomere Silicium-Verbindungen der Formel I eingesetzt werden oder von diesen abgeleitete Vorkondensate. Die hydrolytische Kondensation erfolgt durch Einwirken von Wasser oder Feuchtigkeit und gegebenenfalls in Anwesenheit eines Katalysators und/oder eines Lösungsmittels.

Die kolloidal-disperse Lösung enthält außerdem eines oder mehrere organische Polymere, die eine oder mehrere OH- und/oder NH-Gruppen tragen. Die mittlere Molekülmasse dieser Polymere liegt zwischen 200 und 500.000 und das molare Verhältnis von Polymer zu Silan liegt zwischen 0.1 mmol/mol Silan und 100 mmol/mol Silan.

Die Alkyl-Reste in der allgemeinen Formel I sind z.B. geradkettige, verzweigte oder cyclische Reste mit 1 bis 10 Kohlenstoff-Atomen und vorzugsweise niedere Alkyl-Reste mit 1 bis 6, besonders bevorzugt mit 1 bis 4 Kohlenstoff-Atomen. Spezielle Beispiele sind Methyl, Ethyl, n-Propyl, i-Propyl, n-Butyl, i-Butyl, s-Butyl, t-Butyl, n-Pentyl, n-Hexyl, Cyclohexyl, 2-Ethylhexyl, Dodecyl und Octadecyl.

Bevorzugte Aryl-Reste in der allgemeinen Formel I sind z.B. Phenyl, Biphenyl und Naphthyl. Die Alkoxy-, Acyloxy-, Alkylcarbonyl-, Alkoxycarbonyl-, Alkylamino- und Dialkylamino-Reste leiten sich vorzugsweise von den oben genannten Alkyl- und Aryl-Resten ab. Spezielle Beispiele sind Methoxy, Ethoxy, n- und i-Propoxy, n-, i-, s-und t-Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, $SO_3H$ oder $PO_4H_2$.

Unter den Halogenen sind Fluor, Chlor und Brom und insbesondere Chlor bevorzugt.

Die Silane der allgemeinen Formel I sind über die Reste X hydrolysierbar und kondensierbar. Über diese hydrolytisch kondensierbaren Gruppen wird ein anorganisches Netzwerk mit Si-O-Si-Einheiten aufgebaut. Ohne Einschränkung der Allgemeinheit sind konkrete Beispiele für derartige Silane $Cl_3SiCH_3$, $Si(CH_3)(OC_2H_5)_3$, $Si(C_2H_5)Cl_3$, $Si(C_2H_5)(OC_2H_5)_3$, $Si(CH{=}CH_2)(OC_2H_5)_3$, $Si(CH{=}CH_2)(OC_2H_4OCH_3)_3$, $Si(CH{=}CH_2)(OOCCH_3)_3$, $Cl_2Si(CH_3)_2$, Si

$(CH_3)_2(OC_2H_5)_2$, $Si(C_2H_5)_2(OC_2H_5)_2$, $Cl_2Si(CH=CH_2)(CH_3)$, $Si(CH_3)_2(OCH_3)_2$, $Cl_2Si(C_6H_5)_2$, $Si(C_6H_5)_2(OC_2H_5)_2$, $Cl_3Si(CH=CH_2)$, $Si(OC_2H_5)_3(CH_2\text{-}CH=CH_2)$, $Si(OOCCH_3)_3(CH_2\text{-}CH=CH_2)$ und $(HO)_2Si(C_6H_5)_2$.

In einer bevorzugten Ausführungsform des erfindungsgemäßen Verfahrens werden Silicium-Verbindungen der allgemeinen Formel $SiX_4$ eingesetzt. Ohne Einschränkung der Allgemeinheit sind konkrete Beispiele für derartige Silane $SiCl_4$, $HSiCl_3$, $Si(OCH_3)_4$, $Si(OOCH_3)_4$ und $Si(OC_2H_5)_4$, wobei Tetraalkoxysilane besonders bevorzugt sind und $Si(OCH_3)_4$ (TMOS) ganz besonders bevorzugt ist.

Silane der allgemeinen Formel ! sind entweder käuflich erwerbbar oder nach Methoden herstellbar wie in "Chemie und Technologie der Silicone" (W. Noll, Verlag Chemie, Weinheim/Bergstraße, 1968) beschrieben. Sie können entweder als solche oder in vorkondensierter Form eingesetzt werden.

Zum Aufbau des anorganischen Netzwerkes werden die Silane der allgemeinen Formel I hydrolysiert und polykondensiert. Die Polykondensation erfolgt vorzugsweise nach dem Sol-Gel-Verfahren, wie es z.B. in den DE-A1 2758414, 2758415, 3011761, 3826715 und 3835968 beschrieben ist. Die hydrolytische Kondensation kann z.B. dadurch erfolgen, daß man den zu hydrolysierenden Silicium-Verbindungen, die entweder als solche oder gelöst in einem geeigneten Lösungsmittel vorliegen, das erforderliche Wasser bei Raumtemperatur oder unter leichter Kühlung direkt zugibt (vorzugsweise unter Rühren und in Anwesenheit eines Hydrolyse- und Kondensationskatalysators) und die resultierende Mischung daraufhin einige Zeit (ein bis mehrere Stunden) rührt.

Die Hydrolyse erfolgt in der Regel bei Temperaturen zwischen -20 und 130 °C, vorzugsweise zwischen 0 und 30 °C bzw. dem Siedepunkt des gegebenenfalls eingesetzten Lösungsmittels. Die beste Art und Weise der Zugabe von Wasser hängt vor allem von der Reaktivität der eingesetzten Ausgangsverbindungen ab. So kann man z.B. die gelösten Ausgangsverbindungen langsam zu einem Überschuß an Wasser tropfen oder man gibt Wasser in einer Portion oder portionsweise den gegebenenfalls gelösten Ausgangsverbindungen zu. Es kann auch nützlich sein, das Wasser nicht als solches zuzugeben, sondern mit Hilfe von wasserhaltigen organischen oder anorganischen Systemen in das Reaktionssystem einzutragen.

Die Wasserzugabe kann aber auch über eine chemische Reaktion erfolgen, bei der Wasser im Laufe der Reaktion freigesetzt wird. Beispiele hierfür sind Veresterungen.

Wenn ein Lösungsmittel verwendet wird, kommen neben den niederen aliphatischen Alkoholen (z.B. Ethanol oder i-Propanol) auch Ketone, vorzugsweise niedere Dialkylketone, wie Aceton oder Methylisobutylketon, Ether, vorzugsweise niedere Dialkylether wie Diethylether oder Dibutylether, THF, Amide, Ester, insbesondere Essigsäureethylester, Dimethylformamid, Amine, insbesondere Triethylamin, und deren Gemische in Frage. In bevorzugten Ausführungsformen des erfindungsgemäßen Verfahrens werden Alkohole als Lösungsmittel eingesetzt, bevorzugt Ethanol, i-Propanol, n-Propanol, 1-Methoxy-2-propanol oder 2-Methoxyethanol und ganz besonders bevorzugt Methanol. Die Menge des eingesetzten Lösungsmittel richtet sich nach Menge und Löslichkeit der (teil)kondensierten Silicium-Verbindungen und der eingesetzten Polymere. Entscheidend ist, daß die erfindungsgemäße Beschichtungslösung in kolloidal-disperser Form vorliegt. Desweiteren kann ein Alkohol als Lösungsmittel als Moderator für die Hydrolyse und die Kondensation fungieren und man kann dadurch die Reaktivität des Systems steuern und den Erfordernissen des jeweiligen Anwendungsfalles anpassen.

Die Ausgangsverbindungen müssen nicht notwendigerweise bereits alle zu Beginn der Hydrolyse (Polykondensation) vorhanden sein, sondern in bestimmten Fällen kann es sich sogar als vorteilhaft erweisen, wenn nur ein Teil dieser Verbindungen zunächst mit Wasser in Kontakt gebracht wird und später die restlichen Verbindungen zugegeben werden.

Die Wasserzugabe kann auf einmal oder in mehreren Stufen, z.B. in drei Stufen, durchgeführt werden. Dabei kann in der ersten Stufe z.B. ein Zehntel bis ein Zwanzigstel der zur Hydrolyse benötigten Wassermenge zugegeben werden. Nach kurzem Rühren kann die Zugabe von einem Fünftel bis zu einem Zehntel der erforderlichen Wassermenge erfolgen und nach weiterem kurzen Rühren kann schließlich der Rest zugegeben werden.

Die Kondensationszeit richtet sich nach den jeweiligen Ausgangskomponenten und deren Mengenanteilen, dem gegebenenfalls verwendeten Katalysator, der Reaktionstemperatur, etc. Im allgemeinen erfolgt die Polykondensation bei Normaldruck, sie kann jedoch auch bei erhöhtem oder bei verringertem Druck durchgeführt werden.

Neben hydrolytisch (teil)kondensierten Silicium-Verbindungen enthält die erfindungsgemäße Beschichtungslösung eines oder mehrere organische Polymere in kolloidal-dispers gelöster Form. Diese Polymere weisen OH- und/oder NH-Gruppen auf und die mittleren Molekülmassen liegen zwischen 200 und 500.000, wobei das molare Verhältnis von Polymer zu Silan 0.1 mmol/mol Silan bis 100 mmol/mol Silan beträgt. Die erfindungsgemäß zugesetzten Polymere enthalten OH-, NH- oder SH-Gruppen, über die eine Wechselwirkung mit dem anorganischen Netzwerk erfolgt, welches durch die hydrolytische Kondensation der Silicium-Verbindungen aufgebaut wurde. Durch diese Wechselwirkung wird eine gleichmäßige Verteilung der organischen Polymere im Polykondensat erreicht, die dann zu einer besonders homogenen Porosität der erfindungsgemäßen Antireflexionsbeschichtung führt.

Die organischen Polymere können entweder zu Beginn der hydrolytischen Kondensation zugegeben werden, während dessen oder nach deren Beendigung.

Ohne Einschränkung der Allgemeinheit sind konkrete Beispiele für derartige Polymere Polyhydrazide ⁅CO-R'-CO-NH-NH-CO-R"-CO-NH-NH}oder Polyethylenimine

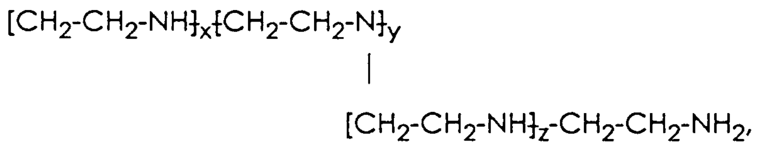

wobei Polyethylenglycolalkylether, Polyvinylacetate, Polyvinylpyrrolidone, Polyvinylalkohole, Poly(2-ethyl-2-oxazoline), Poly(hydroxymethacrylate) und Poly-(hydroxyacrylate) bevorzugt sind.

In bevorzugten Ausführungsformen des erfindungsgemäßen Verfahrens liegt die mittlere Molekülmasse der organischen Polymere zwischen 500 und 50.000.

Die erfindungsgemäße Beschichtungslösung weist einen pH-Wert von ≥7 auf. Dies kann z.B. dadurch erreicht werden, daß für die hydrolytische Kondensation der Silicium-Verbindungen der allgemeinen Formel 1 basische Kondensationskatalysatoren eingesetzt werden, wie z.B. Ammoniak, oder basisch reagierende Polymere, wie z.B. Polyethylenimine. Als sehr vorteilhaft hat es sich erwiesen, wenn eine flüchtige Base eingesetzt wird, die dann durch einfache Temperaturerhöhung aus dem System ausgetrieben werden kann.

Die erfindungsgemäße Beschichtungslösung wird nach üblichen Methoden auf die zu entspiegelnden Oberflächen aufgetragen und getrocknet. Es versteht sich von selbst, daß in Abhängigkeit der gewünschten Schichtdicke die Viskosität der erfindungsgemäßen Beschichtungslösung und die Parameter des Beschichtungsvorganges , z.B. die Geschwindigkeit des Eintauchens und Herausziehens des zu beschichtenden Substrates in die bzw. aus der Beschichtungslösung, aufeinander abgestimmt sein müssen. Dies gehört aber zum Fachwissen eines jeden Beschichtungsfachmannes.

In vielen Fällen kann es von Vorteil sein, wenn man die erfindungsgemäße Beschichtungslösung vor dem Auftragen auf das Substrat durch Rühren oder Stehenlassen altern läßt. Dies führt zu einer Partikelvergrößerung und zur Ausbildung von oligomeren Strukturen. Es ist jedoch stets darauf zu achten, daß die erfindungsgemäße Beschichtungslösung zum Zeitpunkt des Beschichtungsvorgangs kolloid-dispers, d.h. als Sol vorliegt. Dadurch werden besonders gleichmäßige und homogene Antireflexionsbeschichtungen erhalten.

Anschließend werden die organischen Bestandteile, d.h. die organischen Polymere und die gegebenenfalls im Polykondensat vorhandenen Reste R, durch Erhitzen entfernt. Die dabei angewandten Temperaturen richten sich selbstverständlich nach der thermischen Stabilität der beschichteten Substrate und der zu entfernenden organischen Bestandteile. Es resultiert eine rein anorganische Antireflexionsbeschichtung, die thermisch stark belastbar ist.

Überraschenderweise wurde festgestellt, daß mit dem erfindungsgemäßen Verfahren eine kostengünstige Ausrüstung großflächiger Substrate mit einer Antireflexionsbeschichtung geringer Dickeschwankung möglich ist, die bereits durch einmaliges Beschichten der Substrate mit der erfindungsgemäßen Beschichtungslösung realisiert werden kann. Überraschenderweise wurde festgestellt, daß durch das Einbringen von organischen Polymeren in die erfindungsgemäße Beschichtungslösung besonders gleichmäßige Antireflexionsbeschichtungen mit einer besonders einheitlichen Porosität und Schichtdicke erhalten werden. Dies hat zur Folge, daß die erfindungsgemäßen Antireflexionsbeschichtungen einen besonders einheitlichen Brechungsindex zeigen, und daß die mit der erfindungsgemäßen Antireflexionsbeschichtung ausgerüstete Substrate eine gleichmäßige Färbung der Oberfläche aufweisen. Im Gegensatz zum Stand der Technik zeigt die erfindungsgemäße Antireflexionsbeschichtung keinen Brechungsindexgradienten.

Die erfindungsgemäßen Antireflexionsbeschichtungen reduzieren oder tilgen nicht nur Reflexionen, sondern sie erhöhen auch gleichzeitig die Transmission.

Die erfindungsgemäßen Antireflexionsbeschichtungen sind reine anorganische Systeme mit allen damit verbundenen Vorteilen, wie z.B. mechanische und thermische Belastbarkeit oder Alterungsbeständigkeit. Damit können die erfindungsgemäßen Antireflexionsbeschichtungen höheren Betriebstemperaturen ausgesetzt werden, wie sie z. B. beim Betrieb solarthermischer Kraftwerke anfallen.

Die erfindungsgemäßen Antireflexionsbeschichtungen lassen sich gegenüber den Systemen nach dem Stand der Technik wesentlich kostengünstiger applizieren. Vorsichtige Schätzungen gehen davon aus, daß der Preis pro Quadratmeter doppelseitig beschichteten Glases unter DM 10.- liegt.

Die erfindungsgemäßen Antireflexionsbeschichtungen haften nicht nur auf nahezu allen mineralischen Glassorten, sondern auch auf Metallen, wie z.B. Stahl, und auf Kunststoffen, wie z.B. PMMA, PC oder PS.

Durch Größe und Menge des organischen Polymers kann die Porosität und damit der Brechungsindex der erfindungsgemäßen Antireflexionsbeschichtung gezielt gesteuert und den Anforderungen des jeweiligen Anwendungsfalles angepaßt werden. Beispielsweise hat eine Erhöhung des Porenvolumens eine Verminderung des Brechungsindex zur Folge. Ferner kann durch die Schichtdicke der erfindungsgemäßen Beschichtung deren Antireflexionsverhalten

gezielt der Wellenlänge der einfallenden Strahlung angepaßt werden.

Die erfindungsgemäße Antireflexionsbeschichtung kann z.B. zur Entspiegelung und Erhöhung der Transmission von Kathodenstrahlröhren, Instrumentenanzeigen, Brillengläsern, Bildschirmen, Solarkollektoren zur Erhöhung des Wirkungsgrades, Fenstern, Rohren etc. eingesetzt werden.

Anhand von Ausführungsbeispielen wird das erfindungsgemäße Verfahren näher erläutert.

Beispiel

7.6 g Polyethylenglycol mit einer mittleren Molmasse von 10.000 werden in 9.5 g ammoniakalischem Wasser mit einem pH-Wert von 9.5 in Gegenwart von 27.0 g Methanol gelöst. Diese Lösung wird zu einem Gemisch aus 15.2 g Tetramethoxysilan und 80.0 g Methanol gegeben. Nach 10-minütigem Rühren wird die resultierende Mischung filtriert. Nach einer Alterungszeit von ca. 80 Minuten werden Glasscheiben durch Tauchen beschichtet. Zur Erzielung einer ganz besonders gleichmäßigen Schicht von etwa 100 nm wird die zu beschichtende Scheibe im Beschichtungsbad fixiert und die darin befindliche Beschichtungslösung innerhalb von 2 Minuten erschütterungsfrei abgeführt. Nach dem Beschichtungsvorgang werden die Scheiben 30 Minuten bei 130 °C getrocknet, anschließend mit einer Heizrate von 120 K/h auf 500 °C gebracht und eine Stunde bei dieser Temperatur gehalten. Es werden entspiegelte Glasscheiben mit einem gleichmäßigen lilabläulichem Schimmer erhalten. Die resultierende Antireflexionsbeschichtung zeigt einen Brechungsindex von 1.22.

Abbildung 1 zeigt die Transmissionen einer entspiegelten Glasscheibe gemäß dem Ausführungsbeispiel im Vergleich mit einer nicht entspiegelten Probe.

Abbildung 2 zeigt die Erhöhung der visuellen und der solaren Transmission einer gemäß dem Ausführungsbeispiel entspiegelten Glasscheibe.

**Patentansprüche**

**1.** Verfahren zur Herstellung einer porösen Antireflexionsbeschichtung , dadurch gekennzeichnet, dass man eine kolloidal-disperse Lösung,

welche erhalten worden ist durch hydrolytische Kondensation einer oder mehrerer Silicium-Verbindungen der allgemeinen Formel I,

$$R_aSiX_{4-a} \quad (I)$$

in der die Reste gleich oder verschieden sind und R einen organischen Rest mit 1 bis 10 Kohlenstoff-Atomen, bedeutet, der durch Sauerstoff- und/oder Schwefel-Atome und/oder durch Amino-Gruppen unterbrochen sein kann, X für Wasserstoff, Halogen, Hydroxy, Alkoxy, Acyloxy, Alkylcarbonyl, Alkoxycarbonyl oder $NR'_2$ steht, mit R' gleich Wasserstoff, Alkyl oder Aryl und a gleich 0, 1 oder 2,
und/oder von diesen abgeleiteten Vorkondensaten, gegebenenfalls in Anwesenheit eines Lösungsmittels und/oder eines Katalysators durch Einwirken von Wasser oder Feuchtigkeit,
und welche eines oder mehrere OH- und/oder NH-Gruppen aufweisende organische Polymere mit einer mittleren Molekülmasse zwischen 200 und 500.000 in kolloidal gelöster Form enthält,
wobei das molare Verhältnis von Polymer zu Silan zwischen 0.1 mmol/mol Silan und 100 mmol/mol Silan liegt,
und welche einen pH-Wert von ≥ 7 aufweist,

auf ein Substrat aufbringt und trocknet, und dass man durch Erhitzen die organischen Bestandteile entfernt.

**2.** Verfahren nach Anspruch 1, dadurch gekennzeichnet, daß die Silicium-Verbindung der allgemeinen Formel I $SiX_4$ ist, wobei der Rest X die in Anspruch 1 genannte Bedeutung hat.

**3.** Verfahren nach Anspruch 1 oder 2, dadurch gekennzeichnet, dass das gegebenenfalls vorhandene Lösungsmittel ein Alkohol ist, bevorzugt Methanol, Ethanol, i-Propanol, n-Propanol, 1-Methoxy-2-propanol oder 2-Methoxyethanol.

**4.** Verfahren nach einem oder mehreren der Ansprüche 1 bis 3, dadurch gekennzeichnet, dass die mittlere Molekularmasse des organischen Polymers zwischen 500 und 50.000 liegt.

**5.** Verfahren nach einem oder mehreren der Ansprüche 1 bis 4, dadurch gekennzeichnet, dass das organische Polymer ein Polyethylenglycolalkylether, ein Polyvinylacetat, ein Polyvinylpyrrolidon, ein Polyvinylalkohol, ein Poly-(2-ethyl-2-oxazolin), ein Poly(hydroxymethylacrylat) oder ein Poly(hydroxyacrylat) ist.

**6.** Kolloidal-disperse Beschichtungslösung zur Herstellung einer Antireflexionsbeschichtung gemäß einem Verfahren nach einem oder mehreren der Ansprüche 1 bis 5, dadurch gekennzeichnet, dass sie einen pH-Wert von ≥ 7 aufweist, dass sie erhalten worden ist durch hydrolytische Kondensation einer oder mehrerer Silicium-Verbindungen der allgemeinen For-mel 1,

$$R_aSiX_{4-a} \qquad (I)$$

in der die Reste gleich oder verschieden sind und R einen organischen Rest mit 1 bis 10 Kohlenstoff-Atomen, bedeutet, der durch Sauerstoff- und/ oder Schwefel-Atome und/oder durch Amino-Gruppen unterbrochen sein kann, X für Wasserstoff, Halogen, Hydroxy, Alkoxy, Acyloxy, Alkylcarbonyl, Alkoxycarbonyl oder $NR'_2$ steht, mit R' gleich Wasserstoff, Alkyl oder Aryl und a gleich 0, 1 oder 2,

und/oder von diesen abgeleiteten Vorkondensaten, gegebenenfalls in Anwesenheit eines Lösungsmittels und/ oder eines Katalysators durch Einwirken von Wasser oder Feuchtigkeit,
und dass sie eines oder mehrere OH- und/oder NH-Gruppen aufweisende organische Polymere mit einer mittleren Molekülmasse zwischen 200 und 500.000 in kolloidal gelöster Form enthält, wobei das molare Verhältnis von Polymer zu Silan zwischen 0.1 mmol/mol Silan und 100 mmol/mol Silan liegt.

**7.** Beschichtungslösung nach Anspruch 6, dadurch gekennzeichnet, dass sie (teil)kondensierte Silicium-Verbindungen enthält, die sich von Verbindungen der allgemeinen Formel $SiX_4$ ableiten, wobei der Rest X die in Anspruch 1 genannte Bedeutung hat.

**8.** Beschichtungslösung nach Anspruch 6 oder 7, dadurch gekennzeichnet, dass sie als gegebenenfalls vorhandes Lösungsmittel einen Alkohol enthält, bevorzugt Methanol, Ethanol, i-Propanol, n-Propanol, 1-Methoxy-2-propanol oder 2-Methoxyethanol.

**9.** Beschichtungslösung nach einem oder mehreren der Ansprüche 6 bis 8, dadurch gekennzeichnet, dass die mittlere Molekularmasse des organischen Polymers zwischen 500 und 50.000 liegt.

**10.** Beschichtungslösung nach einem oder mehreren der Ansprüche 6 bis 9, dadurch gekennzeichnet, dass sie als organisches Polymer einen Polyethylenglycolalkylether, ein Polyvinylacetat, ein Polyvinylpyrrolidon, einen Polyvinylalkohol, ein Poly(2-ethyl-2-ox-azolin), ein Poly(hydroxymethylacrylat) oder ein Poly-(hydroxyacrylat) enthält.

## Claims

**1.** Method of manufacturing a porous antireflective coating, **characterised in that** a colloidal-disperse solution,

which has been obtained by hydrolytic condensation of one or more silicon compounds of the general formula I,

$$R_aSiX_{4-a} \qquad (I)$$

wherein the residues are the same or different and R means an organic residue having 1 to 10 carbon atoms, which can be interrupted by oxygen and/or sulphur atoms and/or by amino groups, X stands for hydrogen, halogen, hydroxy, alkoxy, acyloxy, alkylcarbonyl, alkoxycarbonyl or $NR'_2$, with R' equal to hydrogen, alkyl or aryl and a equal to 0, 1 or 2,

and/or precondensates derived from same, possibly in the presence of a solvent and/or a catalyst through the action of water or moisture,

and which contains one or more organic polymers containing OH and/or NH groups with an average molecular

weight of between 200 and 500,000 in colloidally dissolved form,

the molar ratio of polymer to silane being between 0.1 mmol/mol silane and 100 mmol/mol silane,

and which has a pH value of ≥7,

is applied to the substrate and dried, and in that the organic constituents are removed by heating.

2. Method according to claim 1, **characterised in that** the silicon compound of the general formula I is $SiX_4$, the residue X having the meaning given in claim 1.

3. Method according to claim 1 or 2, **characterised in that** the possibly present solvent is an alcohol, preferably methanol, ethanol, i-propanol, n-propanol, 1-methoxy-2-propanol or 2-methoxyethanol.

4. Method according to one or more of claims 1 to 3, **characterised in that** the average molecular weight of the organic polymer is between 500 and 50,000.

5. Method according to one or more of claims 1 to 4, **characterised in that** the organic polymer is a polyethylene glycol alkyl ether, a polyvinyl acetate, a polyvinyl pyrrolidone, a polyvinyl alcohol, a poly-(2-ethyl-2-oxazoline), a poly(hydroxymethylacrylate) or a poly(hydroxyacrylate).

6. Colloidal-disperse coating solution for producing an antireflective coating according to a method according to one or more of claims 1 to 5, **characterised in that** it has a pH value of ≥7, in that it is obtained by hydrolytic condensation of one or more silicon compounds of the general formula I,

$$R_aSiX_{4-a} \qquad (I)$$

wherein the residues are the same or different and R means an organic residue having 1 to 10 carbon atoms, which can be interrupted by oxygen and/or sulphur atoms and/or by amino groups, X stands for hydrogen, halogen, hydroxy, alkoxy, acyloxy, alkylcarbonyl, alkoxycarbonyl or $NR'_2$ with R' equal to hydrogen, alkyl or aryl and a equal to 0, 1 or 2,

and/or precondensates derived from these, possibly in the presence of a solvent and/or a catalyst through the action of water or moisture,

and in that it contains one or more organic polymers having OH and/or NH groups, with an average molecular weight of between 200 and 500,000 in a colloidally dissolved form, the molar ratio of polymer to silane being between 0.1 mmol/mol silane and 100 mmol/mol silane.

7. Coating solution according to claim 6, **characterised in that** it contains (partially) condensed silicon compounds, which are derived from compounds of the general formula $SiX_4$, the residue X having the meaning given in claim 1.

8. Coating solution according to claim 6 or 7, **characterised in that** it contains as the possibly present solvent an alcohol, preferably methanol, ethanol, i-propanol, n-propanol, 1-methoxy-2-propanol or 2-methoxyethanol.

9. Coating solution according to one or more of claims 6 to 8, **characterised in that** the average molecular weight of the organic polymer is between 500 and 50,000.

10. Coating solution according to one or more of claims 6 to 9, **characterised in that** it contains as the organic polymer a polyethylene glycol alkyl ether, a polyvinyl acetate, a polyvinyl pyrrolidone, a polyvinyl alcohol, a poly-(2-ethyl-2-oxazoline), a poly(hydroxymethylacrylate) or a poly(hydroxyacrylate).

## Revendications

1. Procédé de production d'un revêtement antiréflexion poreux,

caractérisé en ce qu'
on applique sur un substrat une solution disperse colloïdale qui a été obtenue par condensation hydrolytique d'un ou plusieurs composés du silicium de formule générale (1) :

$$R_aSiX_{4-a} \qquad (I)$$

dans laquelle les restes sont identiques ou différents et R signifie un reste organique ayant de 1 à 10 atomes de carbone qui peut être interrompu par des atomes d'oxygène et/ou de soufre et/ou par des groupes amino, X représente de l'hydrogène, un halogène, un hydroxy, un alkoxy, un acyloxy, un alkylcarbonyle, un alkoxycarbonyle ou $NR'_2$ avec R' égal à de l'hydrogène, un alkyle ou un aryle, et a égal à 0, 1 ou 2,
et/ou les précondensats qui en dérivent, le cas échéant en présence d'un solvant et/ou d'un catalyseur, par action de l'eau ou de l'humidité, et la solution contient des polymères organiques possédant un ou plusieurs groupes OH et/ou NH, ayant une masse moléculaire moyenne comprise entre 200 et 500.000 sous forme dissoute colloidale, avec un rapport molaire du polymère au silane compris entre 0,1 mmol/mol de silane et 100 mmol/mol de silane, et possède une valeur de pH de ≥ 7, on sèche la solution et on élimine par chauffage les constituants organiques.

**2.** Procédé selon la revendication 1,
caractérisé en ce que
le composé du silicium de formule générale (I) est $SiX_4$ dans laquelle le reste X a la signification mentionnée dans la revendication 1.

**3.** Procédé selon la revendication 1 ou 2,
caractérisé en ce que
le solvant éventuellement présent est un alcool, de préférence le méthanol, l'éthanol, l'i-propanol, le n-propanol, le 1-méthoxy-2-propanol ou le 2-méthoxyéthanol.

**4.** Procédé selon l'une ou plusieurs des revendications 1 à 3,
caractérisé en ce que
la masse moléculaire moyenne du polymère organique se situe entre 500 et 50.000.

**5.** Procédé selon l'une ou plusieurs des revendications 1 à 4,
caractérisé en ce que
le polymère organique est un alkyléther de polyéthylèneglycol, un acétate de polyvinyle, une polyvinylpyrrolidone, un alcool polyvinylique, une poly-(2-éthyl-2-oxazoline, un poly(hydroxyméthylacrylate), ou un poly(hydroxyacrylate).

**6.** Solution de revêtement disperse sous forme colloïdale en vue de la préparation d'un revêtement antiréflexion conformément à un procédé selon l'une ou plusieurs des revendications 1 à 5,
caractérisée en ce qu'
elle possède une valeur de pH de ≥ 7, qu'elle a été obtenue par condensation hydrolytique d'un ou plusieurs composés du silicium de formule générale (I) :

$$R_aSiX_{4-a} \qquad (I)$$

dans laquelle les restes sont identiques ou différents et R signifie un reste organique ayant de 1 à 10 atomes de carbone qui peut être interrompu par des atomes d'oxygène et/ou de soufre et/ou par des groupes amino, X représente de l'hydrogène, un halogène, un hydroxy, un alkoxy, un acyloxy, un alkylcarbonyle, un alkoxycarbonyle, ou $NR'_2$ avec R égal à l'hydrogène, un alkyle ou un aryle, et a égal à 0, 1 ou 2,
et/ou des précondensats qui en dérivent, le cas échéant en présence d'un solvant et/ou d'un catalyseur par action de l'eau ou de l'humidité, et elle contient un polymère organique possédant un ou plusieurs groupes OH et/ou NH, ayant une masse moléculaire moyenne compris entre 200 et 500.000 sous forme dissoute colloïdalement, avec un rapport molaire du polymère au silane compris entre 0,1 mmol/mol de silane et 100 mmol/mol de silane.

**7.** Solution de revêtement selon la revendication 6,
caractérisée en ce qu'

elle renferme des composés du silicium (partiellement) condensés qui dérivent des composés de la formule générale $SiX_4$, dans laquelle le reste X a la signification mentionnée à la revendication 1.

**8.** Solution de revêtement selon la revendication 6 ou la revendication 7,
caractérisée en ce qu'
elle renferme comme solvant éventuellement présent, un alcool, de préférence du méthanol, de l'éthanol, de l'i-propanol, du n-propanol, du 1-méthoxy-2-propanol ou du 2-méthoxyéthanol.

**9.** Solution de revêtement selon l'une ou plusieurs des revendications 6 à 8,
caractérisée en ce que
la masse moléculaire moyenne du polymère organique se situe entre 500 et 50.000.

**10.** Solution de revêtement selon l'une ou plusieurs des revendications 6 à 9,
caractérisée en ce qu'
elle renferme comme polymère organique un alkyléther de polyéthylène-glycol, un acétate de polyvinyle, une polyvinylpyrrolidone, un alcool polyvinylique, une poly(2-éthyl-2-oxazoline), un poly(hydroxyméthylacrylate) ou un poly(hydroxyacrylate).

# Entspiegelung durch poröse Sol-Gel-Beschichtung

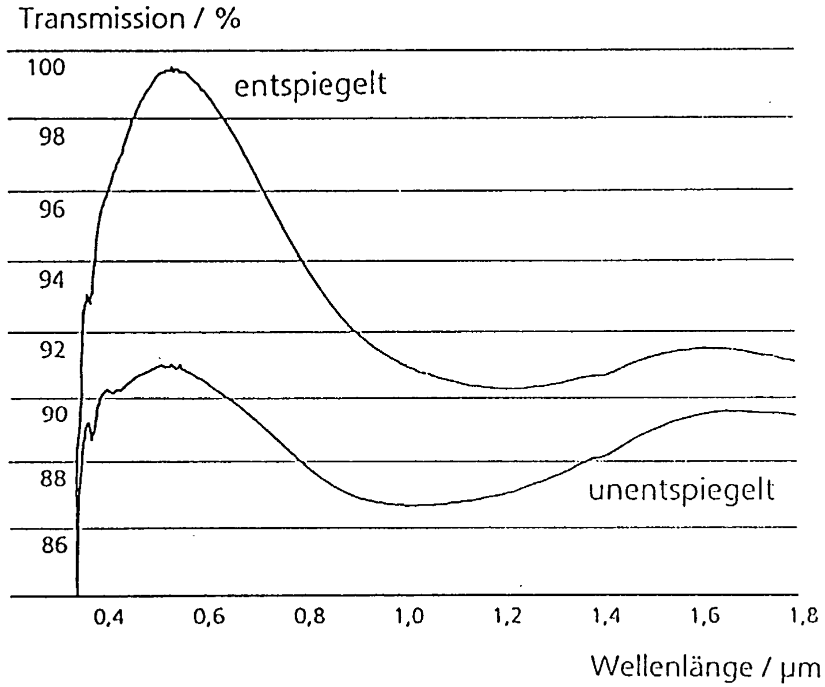


Abb. 1

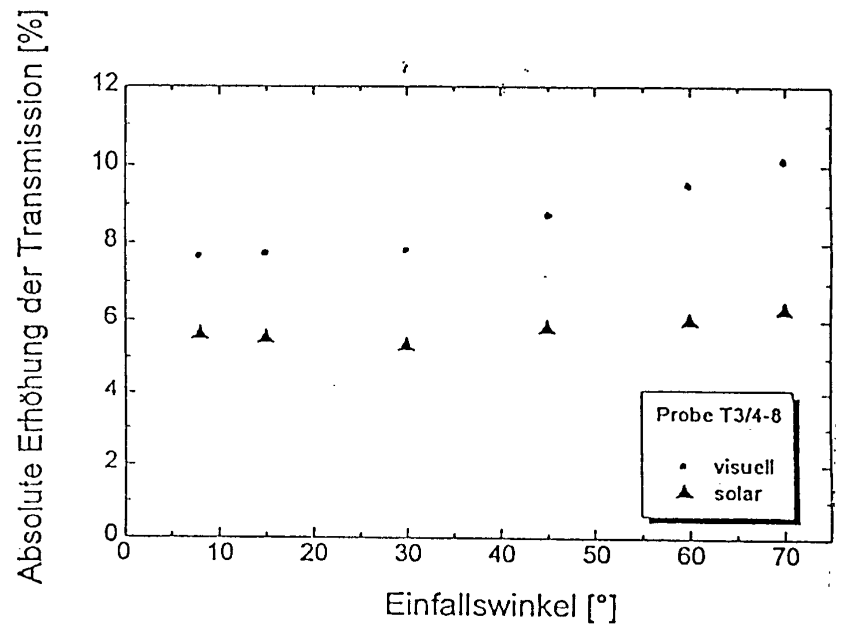


Abb. 2